# EUROPEAN PATENT APPLICATION

(11) **EP 3 771 694 A1**
(43) Date of publication of application: **03.02.2021**
(21) Application number: 20382622.7
(22) Date of filing: 10.07.2020
(51) Int. Cl.: C02F 1/76, A01N 59/00, C02F 103/42

(54) **GRANULES FOR WATER TREATMENT**

(30) Priority: 30.07.2019 ES 201930705
(71) Applicant: Inquide, S.A. (Sociedad Unipersonal), 08213 Polinya (Barcelona) (ES)
(72) Inventor: JUNYENT LLADÓN, Jordi, 08213 POLINYA (Barcelona) (ES)
(74) Representative: Herrero & Asociados, S.L.

(57) **Abstract**

The present invention relates to granules for water shock treatment, especially swimming pools and spas based on fast dissolving trichloroisocyanuric (TCCA).

## Description

The present invention relates to granules for the water shock treatment, especially swimming pools and spas based on fast dissolving trichloroisocyanuric acid (TCCA).

### Background of the Invention

The use of dichloroisocyanuric acid (DCCA) for water treatment is common, for example, European Patent US5230903 describes a composition that comprises a derivative of dichloroisocyanurate and magnesium oxide and hydroxide that is used in closed water systems and has excellent stability during storage.

DCCA has been routinely used in shock treatments.

In the state of the art there are different compositions for water treatment that use di or trichloroisocyanuric that solve different problems, for example in the Patent Publication No. US3325411, the problem of the stability of these compositions is solved by adding acid boric.

Likewise, TCCA compositions have been developed that aim to obtain a quick dissolution as defined in application WO99/40162, which also includes TCCA, boric acid, sodium salts and a surfactant.

In no case have fast dissolving TCCA granules been found, therefore, it is necessary to develop new quick dissolving compositions for water treatments in the form of granules.

### Description of the Invention

The present invention develops granules comprising TCCA to carry out a shock treatment in, for example, swimming pools or spas. As a shock treatment, a very fast dissolution of the granules in the water is intended. The granule of the invention dissolves completely and homogeneously; all its components dissolve and do not leave insoluble residues, residues that can damage and / or discolor the lining of the swimming pool or spa basin.

In the present invention it has been found that the granule is the form that improves dissolution compared to other known forms such as tablets. The main component of the granule is TCCA or a salt thereof, in a percentage between 27% and 95%, which will give an approximate useful chlorine content of between 23% and 85%.

Regarding DCCA, the granule of the invention has a low contribution of isocyanuric acid and this is highly recommended. Isocyanuric acid is a by-product that is formed from chloroisocyanurate products. When isocyanuric acid dissolves in water, it generates hypochlorous acid (residual chlorine), which acts as a disinfectant and isocyanuric acid, as a residue. Isocyanuric acid is a very poorly biodegradable substance that accumulates in water. The maximum concentration of isocyanuric acid in public swimming pools is limited by law to a range of 60-85 ppm depending on the regulations of each country. In any case, above these levels, an overstabilization of the residual chlorine occurs, reducing its effectiveness.

Therefore, a first aspect of the invention relates to granules for water treatment that comprise the following components:
between 27% and 95% trichloroisocyanuric acid or a salt thereof;
between 40% and 4% alkali metal salts;
and between 30% and 1% cyanuric acid
wherein the particle size of each of the components is in a range between 0.050 mm and 0.150 mm and wherein the difference in particle size among all the particles varies between ± .0.05 mm within the defined range.

n the present invention the term "cyanuric acid" refers to both cyanuric acid and isocyanuric acid and its isomers.

The procedure for obtaining the granule consists of grinding each of the components to reduce and homogenize their size; the different components are mixed and finally compacted and granulated to obtain the granules of the invention.

A second aspect is the process for obtaining the granules of the invention, which comprises the steps of:
a) grinding the components comprising the granule: trichloroisocyanuric acid or a salt thereof, alkali metal salts and cyanuric acid, until the particle size of each of the components is between 0.050 mm and 0.150 mm; and wherein the difference in particle size among all particles varies between ± .0.05 mm within the defined range;
b) mixing the components;
c) compacting and granulating the composition

A final aspect of the invention is the use of the granules of the invention for the treatment of swimming pool and spa water.

### Brief description of the drawings

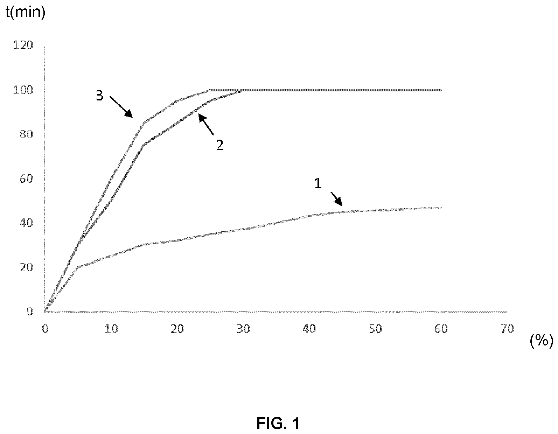

Figure 1 shows a graph of time in minutes versus percent dissolution of the data in Table 1 of Example 1

### Detailed description

As we have said, a first aspect of the invention refers to granules for water treatment that comprise the following components:
between 27% and 95% trichloroisocyanuric acid or a salt thereof;
between 40% and 4% alkali metal salts;
and between 30% and 1% cyanuric acid
wherein the particle size of each of the components is in a range between 0.050 mm and 0.150 mm and wherein the difference in particle size among all the particles varies between ± .0.05 mm within the defined range.

In particular way, the granule comprises trichloroisocyanuric acid. TCCA is preferably between 60% and 80%.

The alkali metal salts are preferably selected from: trisodium phosphate, tetrasodium phosphate, alkali metal carbonates or bicarbonates. In particular, it is a mixture of carbonate and sodium bicarbonate.

The alkali metal salts are preferably between 40% and 20%.

Cyanuric acid is preferably between 10% and 1%.

The composition may comprise one compound or more selected from: boric acid and salts thereof, adipic acid and salts thereof, alumina sulfate, quaternary ammonium compounds, EDTA, triethanolamine, gluconic acid, citric acid.

Preferably the granule has a particle size of each of its components between 0.090 mm and 0.140 mm.

Preferably the granules for water treatment consist of the following components:
between 27% and 95% trichloroisocyanuric acid or a salt thereof;
between 40% and 4% alkali metal salts;
and between 30% and 1% cyanuric acid
wherein the particle size of each of the components is in a range between 0.050 mm and 0.150 mm and wherein the difference in particle size among all the particles varies between ± .0.05 mm within the defined range.

As mentioned above, the second aspect of the invention refers to a process for obtaining the granules of the invention, comprising the steps of:
a) grinding the components comprising the granule: trichloroisocyanuric acid or a salt thereof, alkali metal salts and cyanuric acid, until the particle size of each of the components is between 0.050 mm and 0.150 mm; and wherein the difference in particle size among all particles varies between ± .0.05 mm within the defined range;
b) mixing the components;
c) compacting and granulating the composition.

Preferably the granules of step c) are sieved to obtain granules of a size between 1.5 mm and 2 mm.

The granule size is preferably between 1.5 mm and 2 mm.

### EXAMPLE 1. Comparative example of the behavior in the dissolution of granules with heterogeneous granulometry and granules with homogeneous granulometry

In the present example, granules with heterogeneous granulometry are compared to grains with homogeneous granulometry.

In the example, 3 grams of 100% triclosene sodium dihydrate is used as a standard.

The two compositions, both of the homogeneous grain and that of the heterogeneous grain are as follows; 61.1% TCCA, 29.1% bicarbonate and sodium carbonate, and 9.8% cyanuric acid. The weight of both compositions is 3g.

### Granulometry of raw materials

Granulometry of the heterogeneous composition:
TCCA > 2mm 2% max.; <0.63mm 5% max.

### Salts

**Table 1. Sodium bicarbonate granulometry**

| Mm | 0/50 |
|---|---|
| <0.5 | ≥90 |
| <0.315 | |
| <0.2 | |
| <0.16 | |
| <0.125 | |
| <0.1 | |
| <0.063 | |

**Table 2. Sodium carbonate granulometry**

| Mm | 0/50 |
|---|---|
| <0.5 | 100 |
| <0.315 | 93 |
| <0.2 | 53 |
| <0.16 | 31 |
| <0.125 | 17 |
| <0.1 | 11 |
| <0.063 | 5 |

| | |
|---|---|
| 95% of cyanuric acid has a particle size of 0.177 mm | |

### Homogeneous grain size

TCCA, alkali metal salts and cyanuric acid between 0.090 mm and 0.110 mm

The method used to evaluate the dissolution of the product was as follows, a 3000 ml beaker was filled with 2500 ml of hot water (28°C) keeping it constant by means of a resistor. The test is performed static (without shaking) and the vessels were placed on a colored surface to distinguish well whether undissolved residues are left. To this amount of water, 3g of the sample to be evaluated was added and the% of dissolution was evaluated at different times, noting observations such as: effervescence, residue on the surface or bottom, undissolved particles, etc.

**Table 3. Dissolution test**

| | Dissolution Percentage (%) | | |
|---|---|---|---|
| Time (min) | Standard | Homogeneous granule composition | Heterogeneous granule composition |
| 0 | 0 | 0 | 0 |
| 5 | 30 | 30 | 20 |
| 10 | 50 | 60 | 25 (crumbled and undissolved granule) |
| 15 | 75 | 85 | 30 |
| 20 | 85 | 95 | 32 |
| 25 | 95 | 100 | 35 |
| 30 | 100 | 100 | 37 |
| 35 | 100 | 100 | 40 |
| 40 | 100 | 100 | 43 |
| 45 | 100 | 100 | 45 |
| 60 | 100 | 100 | 47 |

As can be seen, dissolution is faster in the case of the homogeneous granule and crumbling problems without dissolution are avoided.

## Claims

1. Granules for water treatment comprising the following components:
between 27% and 95% trichloroisocyanuric acid or a salt thereof;
between 40% and 4% alkali metal salts;
and between 30% and 1% cyanuric acid
wherein the particle size of each of the components is in a range between 0.050 mm and 0.150 mm and wherein the difference in particle size among all the particles varies between ± .0.05 mm within the defined range.

2. Granules according to claim 1 **characterized in that** the alkali metal salts is a mixture of sodium bicarbonate and sodium carbonate.

3. Granules according to any one of claims 1 to 2 **characterized in that** the trichloroisocyanuric acid is between 60% and 80%.

4. Granules according to any one of claims 1 to 3, **characterized in that** the mixture of sodium bicarbonate and sodium carbonate is between 40% and 20%.

5. Granules according to any one of claims 1 to 4, **characterized in that** the cyanuric acid is between 10% and 1%.

6. Procedure for obtaining granules for water treatment, comprising the steps of:
a) grinding the components comprising the granule: trichloroisocyanuric acid or a salt thereof, alkali metal salts and cyanuric acid, until the particle size of each of the components is between 0.050 mm and 0.150 mm; and wherein the difference in particle size among all particles varies between ± .0.05 mm within the defined range;
b) mixing the components;
c) compacting and granulating the composition

7. Use of the granules defined in claims 1 to 5 for the treatment of swimming pool and spa water.
